# FASCICULE DE BREVET EUROPEEN

(11) **EP 0 480 797 B1**
(45) Date de publication et mention de la délivrance du brevet: **21.12.1994**
(21) Numéro de dépôt: 91402621.6
(22) Date de dépôt: 01.10.1991
(51) Int. Cl.: B01D 53/04

(54) **Procédé de séparation par adsorption et adsorbeur**
Verfahren zur Trennung durch Adsorption und Adsorber
Process for separation by adsorption and adsorber

(30) Priorité: 11.10.1990 FR 9012537
(43) Date de publication de la demande: 15.04.1992
(60) Demande divisionnaire: 94105844.8
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Hay, Léon, F-75013 Paris (FR); Vigor, Xavier, F-78220 Viroflay (FR)
(74) Mandataire: Le Moenner, Gabriel

(56) Documents cités:
- DE-A- 2 409 171

## Description

La présente invention concerne un procédé de séparation par adsorption d'au moins un constituant d'un mélange gazeux, du genre où ledit mélange gazeux circule dans une masse d'adsorbant dans un adsorbeur qui subit des variations cycliques de pression.

En pratique, un tel procédé, notamment lorsqu'il est mis en oeuvre industriellement pour la production d'oxygène par séparation d'air, conduit à des cycles dont la durée ne descend pas actuellement en dessous de 2 x 45 secondes pour un système à deux adsorbeurs, avec les performances suivantes :
- rendement 40 à 60 % ;
- productivité environ de 15 Nm³/h/m³ (Nm³/h O₂ produit par m³ d'adsorbant).

Les adsorbeurs sont réalisés sous forme :
- généralement de cylindres verticaux avec circulation verticale de gaz ;
- le cas échéant pour les grosses tailles, de cylindres horizontaux toujours avec circulation verticale de gaz.

Ces dispositions sont les plus pratiques pour le remplissage des adsorbeurs et permettent de conserver un lit d'épaisseur homogène de tamis moléculaire adsorbant même lorsque celui-ci se tasse (le tassement est évalué à environ 5 % pour des particules sphériques).

La section de passage est calculée pour que, lors de la circulation verticale ascendante, le gaz ne risque pas de "décoller" les grains d'adsorbant sous l'effet d'une vitesse excessive, ce qui conduirait en effet à réduire rapidement l'adsorbant en poussière sous l'action du phénomène d'attrition, ou frottement mutuel des particules.

Les adsorbeurs sont également étudiés pour avoir une distribution homogène de gaz. Celle-ci est facilement réalisable dans un cylindre vertical à circulation verticale (ascendante et descendante), mais cette disposition ne convient qu'aux installations de faible capacité, du fait que la section de passage est alors technologiquement limitée.

L'objectif de l'invention est de parvenir à un investissement plus faible en réduisant la durée de cycle pour augmenter la productivité. Le volume d'adsorbant nécessaire est alors réduit, ainsi que la taille des adsorbeurs, ces deux parties constituant une part importante de l'investissement de l'installation.

Cependant, la réduction de la durée de cycle en dessous de 2 x 45 secondes n'a pas à ce jour été réalisée dans des installations industrielles de capacité significative, telles par exemple une production d'oxygène supérieure à 5 tonnes/jour pour les raisons suivantes :
- risque de baisse des performances avec les adsorbants actuels, en particulier baisse du rendement et augmentation de la consommation d'énergie. L'adsorption est en effet limitée par des phénomènes cinétiques ;
- vitesse de gaz trop importante et attrition de l'adsorbant dans les adsorbeurs actuels ;
- pertes de charge importantes également pour les épaisseurs de lits actuelles.

Le but de la présente invention est d'apporter des solutions à ces différents problèmes et de parvenir à un procédé de séparation par adsorption à durée de cycle comprise entre 20 secondes (2 x 10) et 60 secondes. (2 x 30) avec des performances (rendement/énergie) maintenues à un haut niveau soit :
- un rendement de 40 à 60 % ;
- une productivité qui s'accroît alors à environ 45 Nm³/h/m³.

L'obtention de telles performances permet de diminuer par un facteur trois environ (rapport de productivités) le volume d'adsorbant et des adsorbeurs, et de réaliser ainsi une économie importante (20 à 50 %) sur l'investissement du matériel (qui comprend les adsorbeurs, vannes, tuyauteries et les machines nécessaires au fonctionnement du cycle).

Il est à noter que la taille des vannes, tuyaux et machines reste la même à partir du moment où le rendement est conservé entre une installation à 15 Nm³/h/m³ de productivité et celle à 45 Nm³/h/m³.

Le gain d'investissement est donc réalisé sur la quantité d'adsorbant (divisée par trois) et le coût des adsorbeurs : faible volume, transport et montage facilités.

Cet objectif de l'invention est atteint en ce qu'on fait circuler le mélange gazeux selon une première direction, typiquement horizontale, dans une masse d'adsorbant ayant une dimension principale, orthogonale à la première direction, supérieure à la dimension (ou épaisseur) moyenne de l'adsorbant dans le sens de circulation du gaz, la masse d'adsorbant présentant au moins une partie aval, par rapport au sens de cheminement des gaz en phase de production, qui est formée de particules d'adsorbant fines, dont la granulométrie moyenne est inférieure à 1,7 mm, typiquement entre 0,4 et 1,5 mm, de préférence entre 0,8 et 1,2 mm, et en ce qu'on réalise un cycle de durée comprise entre 20 secondes et 60, typiquement entre 40 et 50 secondes, en limitant à 200 mb (2 x 10⁴ Pa), typiquement entre 50 et 100 mb, la perte de charge entre entrée et sortie de la masse adsorbante lors de l'introduction du mélange gazeux à traiter.

Selon le procédé rappelé ci-dessus, la finesse granulométrique de l'adsorbant permet d'accroître la cinétique de l'adsorption, alors que la vitesse des gaz est accrue. De plus, une circulation horizontale des gaz permet de repousser l'apparition du phénomène d'attrition à des vitesses de cinq à sept fois supérieures à celles mises en oeuvre en circulation verticale ascendante.

L'invention prévoit diverses mises en oeuvre du procédé, séparément ou en combinaison :
- on peut faire en sorte que la totalité de la masse adsorbante soit réalisée en particules fines de 0,4 - 1,7 mm, de préférence de 0,8 - 1,5 mm, ou bien qu'une partie aval seulement de la masse adsorbante soit réalisée avec lesdites particules fines alors qu'une partie amont, selon le sens de cheminement du mélange gazeux en phase de production, est réalisée en particules de granulométrie supérieure à 1,7 mm, par exemple de l'ordre de 2 mm. Dans ce second cas, le pourcentage en poids de particules fines d'adsorbant par rapport au poids total de la masse d'adsorbant est avantageusement compris entre 30 et 70 % ;
- de préférence, la dimension principale de la masse d'adsorbant représente de 1,5 à 3 fois la dimension moyenne de la masse d'adsorbant dans le sens de circulation du mélange gazeux en phase de production.

L'invention concerne également un adsorbeur qui se caractérise en ce que l'enceinte d'adsorbeur présente une dimension allongée selon une direction dite longitudinale, avec à l'intérieur de l'enceinte deux panneaux perforés longitudinaux écartés l'un de l'autre, définissant d'une part entre eux et une partie de la paroi d'enceinte une chambre contenant des particules adsorbantes de dimensions inférieures à 1,7 mm, d'autre part entre eux et le reste de l'enceinte deux collecteurs longitudinaux d'admission/évacuation de gaz, chacune avec un embout tubulaire de traversée de la paroi d'enceinte pour l'admission/évacuation du gaz dans/hors l'adsorbeur.

Selon une forme préférentielle de réalisation, l'adsorbeur comporte des moyens compensateurs de tassement de l'adsorbeur dans la chambre. Par exemple, les panneaux perforés s'étendent, à une extrémité longitudinale de l'adsorbeur, jusqu'à une faible distance d'une paroi de fond d'adsorbeur, les moyens compensateurs comportant une paroi déformable, par exemple réalisée en matériau élastique, définissant ainsi une chambre de fond d'adsorbeur étanche équipée d'un embout de traversée de mise sous pression ou dépression gazeuse. Grâce à cette disposition, on peut assurer d'une part un maintien substantiel en position des particules d'adsorbant sous l'effet de compression du diaphragme, dû à la mise en oeuvre d'une pression qui est au moins égale à la pression haute de cycle, d'autre part et surtout éviter tout passage préférentiel du gaz dans un volume libre en tête d'enceinte, qui ne manquerait pas de se créer à la suite d'un tassement ultérieur inévitable de l'adsorbant.

Les caractéristiques et avantages de la présente invention ressortiront de la description suivante de modes de réalisation, donnée à titre illustratif mais nullement limitatif, faite en relation avec les dessins annexés, sur lesquels :
- la figure 1 est une coupe selon un plan vertical d'un adsorbeur selon l'invention ; et

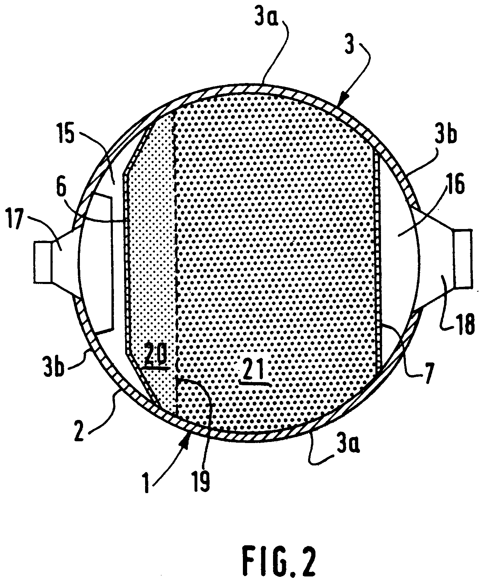

- la figure 2 une coupe horizontale de l'adsorbeur de la figure 1.

L'adsorbeur 1 comporte une enceinte 2 avec une paroi latérale 3 en forme de virole cylindrique à extension dite longitudinale -ici verticale- qui est supérieure à son diamètre et fermée à ses extrémités par deux fonds bombés extérieurement 4 et 5. A l'intérieur de l'enceinte 2 sont agencés deux panneaux perforés parallèles 6 et 7, par exemple des grilles, qui s'étendent depuis le fond inférieur 5 jusqu'à une faible distance du fond supérieur 4, où ils se raccordent à la paroi latérale 3 par des parois transversales 8 et 8'. Un diaphragme ou membrane élastique 10 est fixé sur toute sa périphérie à la fois le long du bord interne 9 des parois transversales 8 et 8' et pour le reste à la paroi de l'enceinte 3 de façon à définir ainsi d'une part une chambre d'adsorbant 11 délimitée entre une partie 5a du fond 5, les panneaux perforés 6 et 7, une partie 3a de la paroi latérale 3 et la membrane 10, et d'autre part une chambre de compression étanche 12 de l'adsorbant 11 entre le fond supérieur 4 et la membrane 10. Le fond 4 est équipé à cet effet d'un embout tubulaire 13 pour mettre sous pression de service la chambre 12.

Les panneaux perforés 6 et 7 définissent extérieurement deux collecteurs internes de distribution gazeuse 15 et 16 entre chaque panneau 6 et 7 et la partie adjacente 3b de paroi latérale 3, une partie 5b du fond 5 et la paroi haute 8, et chaque collecteur 15-16 est équipé d'un large embout tubulaire 17, 18 respectivement, pour le raccordement à une conduite extérieure d'admission et/ou de soutirage de gaz.

Dans la réalisation représentée, la chambre d'adsorbant 11 est emplie d'adsorbants de granulométries différentes qui s'étendent côte à côte en deux strates verticales, en contact mutuel par une face de contact verticale 19. A gauche (sur les dessins) de la face 19 se situe l'adsorbant 20 le plus fin, de granulométrie comprise entre 0,4 et 1,7 mm, typiquement entre 0,8 et 1,5 mm, alors qu'à droite de cette face 19 se situe un adsorbant 21 de granulométrie habituelle, typiquement comprise entre 1,7 et 2,4 mm, généralement de l'ordre de 2 mm.

La mise en place de ces deux masses d'adsorbant est maintenant décrite :
L'adsorbeur est équipé selon une ligne verticale d'une pluralité de tronçons tubulaires 22 qui s'étendent radialement de l'extérieur de la paroi cylindrique 3 jusqu'à déboucher au travers du panneau perforé 6.

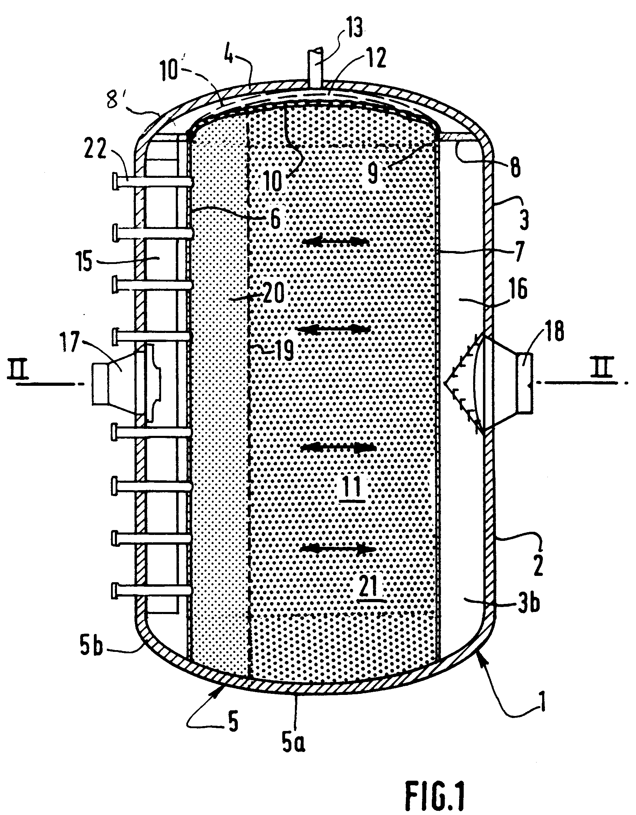

Sur le site de construction, l'adsorbeur 1 est placé "à plat", c'est-à-dire avec sa paroi cylindrique longitudinale selon une extension horizontale, avec les tronçons tubulaires 22 verticaux et en position haute. On peut alors introduire, à travers les tronçons 22, des conduits et appareils de remplissage et dispersion de particules et on prend soin d'introduire d'abord les particules de plus forte granulométrie, puis les particules plus fines, pour constituer successivement la couche 21, puis la couche 20. Pendant cette opération, la chambre 12 est mise sous dépression et la membrane 10 est amenée au voisinage, voire au contact de la face interne du fond bombé 4 (position 10' à la figure 1), libérant ainsi le maximum d'espace pour les particules qui sont à l'état plus ou moins foisonnant. Après remplissage complet, une pression est appliquée dans la chambre de compression 12, de sorte que le diaphragme 10 reste appliqué contre la masse de particules en les comprimant (position 10 à la figure 1). Cette pression est maintenue ou entretenue définitivement.

Sur le site de production, l'adsorbeur est monté verticalement, comme représenté à la figure 1. L'entrée du mélange à traiter s'effectue par l'embout 18 et le collecteur 16 (sens dit co-courant), le panneau perforé 7 formant fenêtre d'entrée, alors que le collecteur 15, l'embout 17 et le panneau 6 formant fenêtre de sortie servant à différents soutirages (sens co-courant) et/ou admission (sens contre-courant). De même différents soutirages peuvent s'effectuer par le collecteur 16 et l'embout 18 (sens contre-courant).

Le procédé et l'adsorbeur décrit peuvent être utilisés dans de nombreuses applications de séparation gazeuse, notamment pour obtenir de l'oxygène à partir d'air. Dans ce cas, l'adsorbeur sera constitué par exemple de particules d'alumine 5A pour la couche 21 et 13X pour la couche 20.

## Revendications

1. Procédé de séparation par adsorption d'au moins un constituant d'un mélange gazeux, du genre où le mélange gazeux circule dans une masse d'adsorbant dans un adsorbeur qui subit des variations cycliques de pression, caractérisé en ce qu'on fait circuler le mélange gazeux selon une première direction, typiquement horizontale, dans une masse d'adsorbant (20-21) ayant une dimension principale, orthogonale à la première direction, supérieure à la dimension (ou épaisseur) moyenne de l'adsorbant dans le sens de circulation du gaz, la masse d'adsorbant présentant au moins une partie (20) située à l'aval, par rapport au sens de cheminement des gaz en phase de production, qui est formée de particules d'adsorbant fines, dont la granulométrie est inférieure à 1,7 mm, et en ce qu'on réalise un cycle de durée comprise entre 20 et 60 secondes, en limitant à 200 mb la perte de charge entre entrée et sortie de la masse adsorbante lors du passage du mélange gazeux à traiter.

2. Procédé selon la revendication 1, caractérisé en ce que la granulométrie des particules fines d'adsorbant est comprise entre 0,8 - 1,5 mm.

3. Procédé selon la revendication 1 ou la revendication 2, caractérisé en ce que la durée de cycle est de l'ordre de 40 à 50 secondes.

4. Procédé selon l'une des revendications 1 à 3, caractérisé en ce que la perte de charge est limitée à une valeur de l'ordre de 100 mb, de préférence de l'ordre de 50 mb.

5. Procédé selon l'une des revendications 1 à 4, caractérisé en ce qu'une partie amont (21) de la masse adsorbante, selon le sens de cheminement du mélange gazeux en phase de production, est formée de particules de granulométrie supérieure à 1,7 mm.

6. Procédé selon l'une des revendications 1 à 4, caractérisé en ce que la totalité de la masse adsorbante est réalisée en particules fines de granulométrie comprise entre 0,4 et 1,7 mm.

7. Procédé selon l'une des revendications 1 à 5, caractérisé en ce que le pourcentage en poids de particules fines d'adsorbant par rapport au poids total de la masse d'adsorbant est compris entre 30 et 70 %.

8. Procédé selon l'une des revendications 1 à 7, caractérisé en ce que la dimension principale de la masse d'adsorbant représente de 1,5 fois à 3 fois la dimension moyenne de la masse d'adsorbant dans le sens de circulation du mélange gazeux en phase de production.

9. Adsorbeur pour la séparation de mélange gazeux, comprenant une enceinte renfermant une masse d'adsorbant (20, 21), caractérisé en ce que l'enceinte (1) présente une dimension allongée selon une direction dite longitudinale et renferme deux panneaux perforés longitudinaux (6-7) sensiblement parallèles, écartés l'un de l'autre, définissant d'une part, entre eux et une partie de la paroi d'enceinte, une chambre (11) contenant des particules adsorbantes de dimensions inférieures à 1,7 mm, et d'autre part deux col lecteurs longitudinaux (15-16) d'admission/évacuation de gaz, chacun avec un embout tubulaire (17-18) de traversée de la paroi d'enceinte (3) pour l'admission/évacuation du gaz dans/hors ledit adsorbeur (1).

10. Adsorbeur selon la revendication 9, caractérisé en ce qu'il comporte des moyens (10) compensateurs de tassement de l'adsorbant dans la chambre (11).

11. Adsorbeur selon la revendication 9 ou la revendication 10, caractérisé en ce que les panneaux perforés (6-7) s'étendent, à une extrémité longitudinale de l'adsorbeur, à faible distance d'une paroi de fond de l'adsorbeur (4), le moyen compensateur comprenant une paroi déformable (10) définissant une chambre de fond étanche (12) couplable à des moyens (13) de mise sous pression ou dépression gazeuse de la chambre de fond (12).

12. Adsorbeur selon l'une des revendications 9 à 11, caractérisé en ce que la dimension longitudinale de l'enceinte d'adsorbeur est de 1,5 à 3 fois la dimension transversale entre panneaux perforés (6-7).

13. Adsorbeur selon l'une des revendications 9 à 12, caractérisé en ce que l'enceinte d'adsorbeur est de forme cylindrique allongée (3) avec des fonds d'extrémités bombés (4-5).

14. Adsorbeur selon l'une des revendications 9 à 13, caractérisé en ce que la masse d'adsorbant dans la chambre (11) est formée au moins en partie (20) de particules d'adsorbant ayant une granulométrie inférieure à 1,7 mm, en une couche longitudinale, en contact avec l'un (6) des panneaux perforés (6-7).

15. Adsorbeur selon la revendication 14, caractérisé en ce que la chambre (11) est totalement emplie de particules adsorbantes ayant une granulométrie entre 0,4 et 1,7 mm.

16. Adsorbeur selon la revendication 14, caractérisé en ce que la couche de particules à granulométrie (20) inférieure à 1,7 mm a une épaisseur inférieure à l'écartement entre les deux panneaux perforés (6-7), la partie restante de la chambre (11) étant emplie de particules adsorbantes de dimension supérieure à 1,7 mm.

17. Adsorbeur selon l'une des revendications 9 à 16, caractérisé en ce qu'il comporte une série d'embouts tubulaires obturables (22) de traversée agencés longitudinalement en regard d'un panneau perforé (6) et s'étendant intérieurement jusqu'à traverser ledit panneau perforé (6).

18. Procédé de remplissage de la chambre (11) d'un adsorbeur (1) selon la revendication 17, caractérisé en ce que l'adsorbeur (1) est positionné spatialement de façon que sa dimension longitudinale soit horizontale, avec la série d'embouts tubulaires (22) en position haute selon une disposition verticale, en ce qu'on introduit l'adsorbant dans la chambre (11) par les embouts tubulaires (22), et en ce qu'on le met en place sur le site d'utilisation, avec sa dimension longitudinale agencée verticalement.

## Claims

1. Method of separation by adsorption of at least one constituent of a gaseous mixture, of the type in which the gaseous mixture circulates in a mass of adsorbent in an adsorber which undergoes cyclic pressure variations, characterized in that the gaseous mixture is circulated in a first, horizontal direction in a mass of adsorbent (20-21) having a principal dimension, orthogonal to the first direction, greater than the mean dimension (or thickness) of the adsorbent in the direction of circulation of the gas, the mass of adsorbent having at least a part (20), located downstream with respect to the direction of flow of the gases in the production phase, which is formed by fine adsorbent particles, the particle size of which is less than 1.7 mm, and in that a cycle is carried out with a duration lying between 20 and 60 seconds, while limiting to 200 mbar the head loss between entry and exit of the adsorbent mass during the passage of the gaseous mixture to be treated.

2. Method according to Claim 1, characterized in that the particle size of the fine particles of adsorbent lies between 0.8-1.5 mm.

3. Method according to Claim 1 or Claim 2, characterized in that the cycle duration is of the order of 40 to 50 seconds.

4. Method according to one of Claims 1 to 3, characterized in that the head loss is limited to a value of the order of 100 mbar, preferably of the order of 50 mbar.

5. Method according to one of Claims 1 to 4, characterized in that an upstream part (21) of the adsorbent mass, in the direction of flow of the gaseous mixture in the production phase, is formed by particles with particle size greater than 1.7 mm.

6. Method according to one of Claims 1 to 4, characterized in that all of the adsorbent mass is made of fine particles with particle size lying between 0.4 and 1.7 mm.

7. Method according to one of Claims 1 to 5, characterized in that the percentage by weight of fine particles of adsorbent with respect to the total weight of the mass of adsorbent lied between 30 and 70 %.

8. Method according to one of Claims 1 to 7, characterized in that the principal dimension of the mass of adsorbent represents from 1.5 times to 3 times the mean dimension of the mass of adsorbent in the direction of circulation of the gaseous mixture in the production phase.

9. Adsorber for gaseous mixture separation, comprising an enclosure containing a mass of adsorbent (20, 21), characterized in that the enclosure (1) has an elongated dimension along a so-called longitudinal direction and contains two substantially parallel longitudinal perforated panels (6-7), which are separated from each other and define, on the one hand, between them and a part of the enclosure wall, a chamber (11) containing adsorbent particles with dimensions less than 1.7 mm and, on the other hand, two longitudinal manifolds (15-16) for gas inlet/outlet, each with a tubular adapter (17-18) for passing through the enclosure wall (3) for inlet/outlet of the gas into/out of the said adsorber (1).

10. Adsorber according to Claim 9, characterized in that it includes means (10) conpensating for settling of the adsorbent in the chamber (11).

11. Adsorber according to Claim 9 or Claim 10, characterized in that the perforated panels (6-7) extend, at a longitudinal end of the adsorber, at a short distance from an end wall of the adsorber (4), the compensator means comprising a deformable wall (10) defining a leaktight end chamber (12) which can be coupled to means (13) for gaseous pressurization or depressurization of the end chamber (12).

12. Adsorber according to one of Claims 9 to 11, characterized in that the longitudinal dimension of the adsorber enclosure is from 1.5 to 3 times the transverse dimension between perforated panels (6-7).

13. Adsorber according to one of Claims 9 to 12, characterized in that the adsorber enclosure is of elongate cylindrical shape (3) with rounded ends (4-5).

14. Adsorber according to one of Claims 9 to 13, characterized in that the mass of adsorbent in the chamber (11) is formed at least in part (20) by particles of adsorbent having a particle size less than 1.7 mm, in a longitudinal layer, in contact with one (6) of the perforated panels (6-7).

15. Adsorber according to Claim 14, characterized in that the chamber (11) is totally filled with adsorbent particles having a particle size between 0.4 and 1.7 mm.

16. Adsorber according to Claim 14, characterized in that the layer (20) of particles with particle size less than 1.7 mm has a thickness less than the separation between the two perforated panels (6-7), the remaining part of the chamber (11) being filled with adsorbent particles with size greater than 1.7 mm.

17. Adsorber according to one of Claims 9 to 16, characterized in that it includes a series of closeable tubular through-adapters (22) arranged longitudinally facing a perforated panel (6) and extending inwards until passing through the said perforated panel (6).

18. Method of filling the chamber (11) of an adsorber (1) according to Claim 17, characterized in that the adsorber (1) is spatially positioned such that its longitudinal dimension is horizontal, with the series of tubular adapters (22) in the upper position in a vertical arrangement, in that the adsorbent is introduced into the chamber (11) through the tubular adapters (22), and in that it is installed on the work site with its longitudinal dimension arranged vertically.

## Patentansprüche

1. Verfahren zur Abtrennung zumindest eines Bestandteils aus einem Gasgemisch durch Adsorption, bei dem das Gasgemisch in einer Adsorbensmasse in einem Adsorber zirkuliert, der zyklischen Druckschwankungen unterworfen wird, **dadurch gekennzeichnet**, daß man das Gasgemisch in einer ersten horizontalen Richtung in einer Adsorbensmasse (20-21) mit einer Hauptausdehnung zirkulieren läßt, die orthogonal zu der ersten Richtung und größer als die mittlere horizontal Ausdehnung (oder Dicke) des Adsorbens in der Zirkulationsrichtung des Gases ist, wobei die Adsorbensmasse zumindest einen Anteil (20) hat, der, bezogen auf die Strömungsrichtung der Gase in der Produktionsphase, stromab liegt und aus feinen Adsorbenspartikeln gebildet ist, deren Korngröße unterhalb von 1,7 mm liegt, und daß man einen Zeitdauerzyklus zwischen 20 und 60 Sekunden ver- wirklicht und den Druckverlust zwischen Einlaß und Auslaß der Adsorbensmasse während des Durchtritts des zu behandelnden Gasgemisches auf 200 mb beschränkt.

2. Verfahren nach Anspruch 1, dadurch gekennzeichnet, daß die Korngröße der feinen Adsorbenspartikel zwischen 0,8 und 1,5 mm liegt.

3. Verfahren nach Anspruch 1 oder 2, dadurch gekennzeichnet, daß die Zykluszeitdauer die Größenordnung von 40 bis 50 Sekunden hat.

4. Verfahren nach einem der Ansprüche 1 bis 3, dadurch gekennzeichnet, daß der Druckverlust auf einen Wert in der Größenordnung von 100 mb, vorzugsweise in der Größenordnung von 50 mb, beschränkt ist.

5. Verfahren nach einem der Ansprüche 1 bis 4, dadurch gekennzeichnet, daß ein in Strömungsrichtung des Gasgemisches in der Produktionsphase stromaufseitiger Teil (21) der Adsorbensmasse aus Partikeln einer Korngröße von mehr als 1,7 mm besteht.

6. Verfahren nach einem der Ansprüche 1 bis 4, dadurch gekennzeichnet, daß die Gesamtheit der Adsorbensmasse aus feinen Partikeln einer Korngröße zwischen 0,4 und 1,7 mm bestent.

7. Verfahren nach einem der Ansprüche 1 bis 5, dadurch gekennzeichnet, daß der Gewichtsprozentsatz feiner Adsorbenspartikel, bezogen auf das Gesamtgewicht der Adsorbensmasse, zwischen 30 und 70 % liegt.

8. Verfahren nach einem der Ansprüche 1 bis 7, dadurch gekennzeichnet, daß die Haupfausdehnung der Adsorbensmasse das 1,5-fache bis 3-fache der mittleren Ausdehnung der Masse in Strömungsrichtung des Gasgemisches in der Produktionsphase beträgt.

9. Adsorber zur Trennung eines Gasgemisches, der ein, eine Adsorbensmasse (20, 21) enthaltendes Gehäuse aufweist, dadurch gekennzeichnet, daß das Gehäuse (1) eine lange Abmessung in einer sogenannten Longitudinalrichtung hat und zwei gelochte longitudinale, im wesentlichen parallele Platten (6 - 7) umschließt, die voneinander beabstandet sind, und einerseits zwischen ihnen und, einem Teil der Gehäusewand eine Kammer (11), die Adsorbenspartikel von Größen unterhalb 1,7 mm enthält, und andererseits zwei longitudinale Sammelkanäle (15 - 16) für Gaseinlaß/- Gasentleerung festlegen, von denen jeder ein rohrförmiges Ansatzstück (17 -18) für den Durchtritt durch die Gehäusewand (3) für Gaseinlaß/-Gasentleerung in den/aus dem Adsorber (1) hat.

10. Adsorber nach Anspruch 9, dadurch gekennzeichnet, daß er Einrichtungen (10) zur Kompensation von Setzungserscheinungen des Adsorbens in der Kammer (11) aufweist.

11. Adsorber nach Anspruch 9 oder 10, dadurch gekennzeichnet, daß sich die gelochten Platten (6 - 7) an einem longitudinalen Ende des Adsorbers in einer geringen Entfernung von einer Bodenwand (4) des Adsorbers erstrecken, wobei die Einrichtung zur Kompensation eine verformbare Wand (10) aufweist, die eine dichte Bodenkammer (12) begrenzt, die an Einrichtungen (13) zur Gasdruckbeaufschlagung oder Gasunterdruckbeaufschlagung der Bodenkammer (12) koppelbar ist.

12. Adsorber nach einem der Ansprüche 9 bis 11, dadurch gekennzeichnet, daß die longitudinale Ausdehnung des Adsorbergehäuses das 1,5-fache bis 3-fache der transversalen Ausdehnung zwischen den gelochten Platten (6 - 7) ist.

13. Adsorber nach einem der Ansprüche 9 bis 12, dadurch gekennzeichnet, daß das Adsorbergehäuse die Form eines länglichen Zylinders (3) mit gewölbten Endböden (4 - 5) hat.

14. Adsorber nach einem der Ansprüche 9 bis 13, dadurch gekennzeichnet, daß die Adsorbensmasse in der Kammer (11) zumindest zu einem Teil (20) aus Adsorbenspartikeln mit einer Korngröße von weniger als 1,7 mm in einer longitudinalen Schicht im Kontakt mit einer (6) der gelochten Platten (6 - 7) besteht.

15. Adsorber nach Anspruch 14, dadurch gekennzeichnet, daß die Kammer (11) vollständig mit Adsorbenspartikeln gefüllt ist, die eine Korngröße zwischen 0,4 und 1,7 mm haben.

16. Adsorber nach Anspruch 14, dadurch gekennzeichnet, daß die Schicht aus Partikeln (20) mit einer Korngröße von weniger als 1,7 mm eine Dicke hat, die kleiner als der Abstand zwischen den beiden gelochten Platten (6 - 7) ist, wobei der verbleibende Teil der Kammer (11) mit adsorbierenden Partikeln aufgefüllt ist, die eine Größe von mehr als 1,7 mm haben.

17. Adsorber, nach einem der Ansprüche 9 bis 16, dadurch gekennzeichnet, daß er eine Reihe absperrbarer rohrförmiger Durchlaßansatzstücke (22) aufweist, die longitudinal gegenüber einer gelochten Platte (6) angeordnet sind und sich nach innen soweit erstrecken, daß sie die gelochte Platte (6) durchdringen.

18. Verfahren zum Füllen der Kammer (11) eines Adsorbers (1) nach Anspruch 17, dadurch gekennzeichnet, daß der Adsorber (1) räumlich derart positioniert ist, daß seine longitudinale Abmessung horizontal ist, wobei die Rehe rohrförmiger Ansatzstücke vertikal steht und sich oben befindet, daß man das Adsorbens in die Kammer (11) durch die rohrförmigen Ansatzstücke (22) einträgt und daß man ihn am Benutzungsort so aufstellt, daß seine longitudinale Abmessung vertikal verläuft.
